# EUROPÄISCHE PATENTSCHRIFT

(11) **EP 1 124 385 B1**
(45) Veröffentlichungstag und Bekanntmachung des Hinweises auf die Patenterteilung: **14.01.2004**
(21) Anmeldenummer: 01102299.3
(22) Anmeldetag: 01.02.2001
(51) Int. Cl.: H04N 13/04, H04N 13/00

(54) **Verfahren und Vorrichtung zur mehrdimensionalen Darstellung eines Objekts**
Method and apparatus for multidimensional display of an object
Méthode et dispositif pour l'affichage à plusieurs dimensions d'un objet

(30) Priorität: 08.02.2000 DE 10005335
(43) Veröffentlichungstag der Anmeldung: 16.08.2001
(73) Patentinhaber: DaimlerChrysler AG, 70567 Stuttgart (DE)
(72) Erfinder: Buck, Matthias, Dr., 89233 Neu-Ulm (DE); Gillner, Walter, Dr., 89081 Ulm (DE); Jorke, Helmut, 89547 Gerstetten (DE)

(56) Entgegenhaltungen:
- WO-A-98/15869
- WO-A-98/49837
- US-A- 5 872 590
- SOUTHARD D A: "VIEWING MODEL FOR VIRTUAL ENVIRONMENT DISPLAYS" JOURNAL OF ELECTRONIC IMAGING, SPIE + IS&T, US, Bd. 4, Nr. 4, 1. Oktober 1995 (1995-10-01), Seiten 413-420, XP000538255 ISSN: 1017-9909

## Beschreibung

Die Erfindung betrifft ein Verfahren und eine Vorrichtung zur mehrdimensionalen Darstellung eines Objekts, insbesondere zur 3D-Darstellung eines erzeugten virtuellen Objekts, für eine Mehrzahl von Betrachtern.

Üblicherweise werden zur mehrdimensionalen Darstellung, insbesondere dreidimensionalen Darstellung, eines in einem Rechner erzeugten virtuellen Objekts Projektionseinrichtungen oder Anzeigeeinrichtungen zur Projektion bzw. Darstellung des Objekts in Form eines 3D-Bildes (3D=dreidimensional) verwendet. Beispielsweise werden dazu Brillen verwendet, bei denen die Positionen der Augen des jeweiligen Betrachters zur weitgehend realitätsnahen, perspektivischen Sicht derart berücksichtigt werden, daß für jedes Auge mittels der Brille ein zugehöriges Bild erzeugt wird. Dies erfolgt beispielsweise mittels Projektoren mit unterschiedlich gerichteter Polarisation für die rechte bzw. linke Bilddarstellung. Ein weiteres Verfahren neben der Polarisationsfiltertechnik ist das Verfahren mit Liquid-Crystal-Shutterbrillen (LC-Shutterbrille oder nur Shutterbrille genannt). Dabei werden mittels sogenannter LC-Shutter, welche im Projektor oder in der Brille angeordnet sind, das rechte und das linke Halbbild synchron taktgesteuert auf einer Projektionsfläche dargestellt. Im gleichen Wechseltakt gibt die Shutterbrille betrachterseitig die Sicht auf das passende Halbbild frei. Die Taktfrequenz der Umschaltung zwischen linkem und rechtem Glas (=Auge des Betrachters) der Shutterbrille wird maßgeblich durch Vermeidung eines sogenannten Flimmereffekts bestimmt. Für eine flimmerfreie Wahrnehmung des sogenannten Stereobilds beträgt die Wechselfrequenz etwa 50 Hz.

Beide hier beschriebenen Systeme (Polarisationsfilter oder Shutterbrille) erlauben lediglich die 3D-Darstellung des virtuellen Objekts nur für einen Betrachter, d.h. für eine Position in einem Raum. Bei einem Positionswechsel des Betrachters bzw. bei mehreren Betrachtern in einem Raum ändert sich die jeweilige Sicht des Betrachters bzw. der Betrachter auf das virtuelle Objekt derart, daß dieses nicht ortsfest im Raum erscheint, wodurch es positionsabhängig zu Verzerrungen oder Stauchungen des dargestellten virtuellen Objekts kommt.

Aus der internationalen Patentanmeldung WO98/15869 A1 und dem Artikel Southard, D.A.: "Viewing model for virtual environment displays" in Journal of Electronic Imaging, Band 4, Nr. 4, Oktober 1995, Seiten 413 - 420 sind Systeme und Verfahren zur 3D-Bilddarstellung auf einer Bildanzeigeeinrichtung bekannt, bei denen ein oder mehrere Betrachter computergenerierte Bilddaten präsentiert bekommen, wobei die präsentierten Bilddaten abhängig von der Position des jeweiligen Betrachters bestimmt und entsprechend dem Betrachter zur Verfügung gestellt werden. Zur Selektion der einzelnen Bilder werden die zuvor beschriebenen Shutterbrillen verwendet.

Weiterhin ist aus der internationalen Patentanmeldung WO98/49837 ein Verfahren zur Projektion eines Stereobildes für einen Betrachter bekannt, bei dem eine Mehrzahl von Spektralbereichen aus dem Strahlenspektrum des Projektors herausgefiltert werden und zur Bildung der beiden Halbbilder für die Stereoprojektion verwendet werden.

Der Erfindung liegt daher die Aufgabe zugrunde, ein Verfahren zur mehrdimensionalen Darstellung eines Objekts für eine Mehrzahl von Betrachtern anzugeben, welches eine weitgehend realitätsnahe Darstellung des Objekts für mehrere Betrachter auf verschiedenen Positionen ermöglicht. Darüber hinaus ist eine besonders einfache Vorrichtung zur mehrdimensionalen Darstellung eines Objekts für eine Mehrzahl von Betrachtern anzugeben.

Die erstgenannte Aufgabe wird erfindungsgemäß gelöst durch ein Verfahren zur mehrdimensionalen Darstellung eines Objekts für eine Mehrzahl von Betrachtern, bei dem für den jeweiligen Betrachter eine zugehörige Position im Raum bestimmt und anhand der Position ein die perspektivische Sicht des zugehörigen Betrachters repräsentierendes Bild für das Objekt erzeugt wird. Durch eine derartige positionsabhängige Bilddarstellung für jeden einzelnen Betrachter ist es ermöglicht, daß mehrere Betrachter sich simultan in einer Umgebung, z.B. einem Raum, bewegen können und dabei jeweils die von ihrer Position wahrgenommene Sicht auf das Objekt betrachten können. Somit ist das Verfahren insbesondere multi-user-fähig und somit für Teamarbeiten einsetzbar, bei welchen mehrere Personen gleichzeitig an einem Objekt möglichst realitätsnah arbeiten können. Darüber hinaus ist eine Mehrseitenprojektion des Objekts gegeben.

Zweckmäßigerweise wird zur Erzeugung des dem jeweiligen Betrachter zugehörigen Bilds aus einem Strahlenspektrum einer Bildanzeigeeinrichtung eine Mehrzahl von Spektralbereichen herausgefiltert. Hierbei werden zur Erzeugung von verschiedenen, die betreffenden Positionsperspektiven beschreibenden Bildern unterschiedliche Strahlen- oder Emissionsspektren der Bildanzeigeeinrichtung ausgekoppelt. Bevorzugtermaßen werden als Spektralbereiche schmalbandige Frequenzbänder, insbesondere die drei Farbrezeptoren repräsentierenden Spektralbereiche, ausgekoppelt. Die drei Farbrezeptoren, welche die drei für das menschliche Auge wahrnehmenden Grundfarben rot, grün und blau sind, weisen eine besonders hohe Spektralreinheit auf.

Bedingt durch die hohe Spektralreinheit der Grundfarben rot, grün und blau werden vorzugsweise für jeden Betrachter besonders schmalbandige und benachbarte Frequenzbänder von ca. 5 bis 20 nm herausgefiltert. Die für jeden einzelnen Betrachter ausgekoppelten und auch als Frequenztripel bezeichneten Frequenzbänder für die drei Grundfarben liegen bevorzugt innerhalb des Emissionsspektrums der einzelnen Farbrezeptoren des menschlichen Auges. Beispielsweise werden für die Farben rot, grün und blau die repräsentierenden Frequenzbänder von 445 bis 455 nm, von 515 bis 525 nm bzw. von 605 bis 615 nm für einen einzelnen Betrachter ausgekoppelt.

Zur weitgehend realitätsnahen virtuellen Darstellung des Objekts werden für jeden Betrachter zwei Bilder (im weiteren Halbbilder genannt) erzeugt, wobei diese das linke bzw. das rechte Auge repräsentierende Bildinformationen umfassen. Hierdurch werden die durch den Abstand der Augen bedingten zwei verschiedenen Perspektiven des einzelnen Betrachters berücksichtigt.

Zur für die dreidimensionale Wahrnehmung erforderlichen Trennung der den Augen des Betrachters jeweils zugehörigen Halbbilder werden vorzugsweise benachbarte unterschiedliche Spektralbereiche aus dem Emissions- oder Strahlenspektrum der Bildanzeigeeinrichtung ausgekoppelt. Je nach Vorgabe des Systems werden für einen ersten Betrachter für beide Augen jeweils um die zugehörigen Spektrallinien für die Grundfarben als Frequenzbänder ca. 5 bis 20 nm (auch Halbwertsbreite genannt) ausgekoppelt. D.h. für das linke Auge werden für die Farben rot, grün und blau beispielsweise die Frequenzbänder von 445 bis 455 nm, von 515 bis 525 nm bzw. von 605 bis 615 nm(auch als ein Frequenztripel FT1 bezeichnet) und für das rechte Auge die Frequenzbänder 460 bis 470 nm, 530 bis 540 nm bzw. 620 bis 630 nm ausgekoppelt. Für den zweiten Betrachter werden die Frequenzbänder entsprechend verschoben und um die Spektrallinien von z.B. 480, 550 bzw. 635 nm ausgekoppelt.

Zusätzlich oder alternativ werden die beiden Halbbilder des jeweiligen Betrachters mit einer zugehörigen Taktsequenz angezeigt. Hierdurch kann die Anzahl der Betrachter gegenüber der nur auf Interferenzfilterung basierenden Trennung der Bilder bzw. der Halbbilder für mehrere und einzelne Betrachter zur positionsabhängigen 3D-Darstellung des Objekts vergrößert werden. Darüber hinaus wird durch eine entsprechende Vorgabe der Taktfrequenz von z.B. größer als 50 Hz, insbesondere von ca. 160 bis 180 Hz, der sogenannte Flimmereffekt weitgehend vermieden bzw. unterdrückt.

Eine besonders bevorzugte Ausführungsform ist gegeben für mehrere Betrachter, indem bei gleicher Taktsequenz unterschiedliche Spektralbereiche oder Frequenztripel ausgekoppelt werden. Alternativ werden für mehrere Betrachter bei unterschiedlicher Taktsequenz gleiche Spektralbereiche oder Frequenztripel ausgekoppelt. Für eine nochmalige Vergrößerung der Anzahl der Betrachter und der gleichzeitigen Bilddarstellung werden zusätzlich Polarisationsfilter verwendet, die unterschiedlich linear oder zirkular polarisiert werden.

Die zweitgenannte Aufgabe wird erfindungsgemäß gelöst durch eine Vorrichtung zur mehrdimensionalen Darstellung eines Objekts für eine Mehrzahl von Betrachtern mit einer dem jeweiligen Betrachter zugeordneten Bildselektionseinrichtung, welche im folgenden Bildaufnahmeeinrichtung genannt wird, sowie eine dem jeweiligen Betrachter zugehörige Meßeinrichtung zur Bestimmung seiner Position im Raum und einer Mehrzahl von Bildanzeigeeinrichtungen zur Darstellung eines die perspektivische Sicht des zugehörigen Betrachters repräsentierenden Bilds für das Objekt anhand der Position des Betrachters. Hierdurch ist es ermöglicht, daß gleichzeitig von mehreren Betrachtern das gleiche Objekt aus der dem jeweiligen Betrachter zugehörigen perspektivischen Sicht besonders realitätsnah und weitgehend verzerrungsarm wahrgenommen wird. Als Bildanzeigeeinrichtung dient beispielsweise ein sogenannter CRT-Monitor, ein LCD-Panel, ein Projektionsdisplay, ein Laser-Projektor oder ein Plasmadisplay. Für eine dem jeweiligen Betrachter positionsabhängige Darstellung des Objekts und somit zur Darstellung von unterschiedlichen'Bildinformationen für jeden Betrachter ist als Bildaufnahmeeinrichtung für jeden Betrachter zweckmäßigerweise eine Brille vorgesehen.

Zur Trennung der jeden einzelnen Betrachter charakterisierenden Halbbilder des darzustellenden Objekts sind mindestens zwei vorgebbare Interferenzfilter vorgesehen. D.h. für jedes Auge des Betrachters werden als Halbbild die Grundfarben rot, grün und blau zugehörigen Spektralbereiche (=Frequenztripel) herausgefiltert, wobei als Spektralbereiche für das linke Auge bzw. für das rechte Auge eng benachbarte und somit unterschiedliche Spektralbereiche ausgekoppelt werden. Dazu sind die Interferenzfilter besonders schmalbandig ausgeführt und weisen einen für die jeweilige Grundfarbe schmalen Durchlässigkeitsbereich auf.

Als Interferenzfilter ist vorzugsweise ein dielektrisches Filter vorgesehen. Hierdurch ist in besonders einfacher Art und Weise eine 3D-Darstellung des Objekts zum einen für jedes Auge und/oder für jeden Betrachter getrennt mit den zugehörigen unterschiedlichen Bildinformationen für die jeweilige Betrachterposition ermöglicht.

Zur Erhöhung der Anzahl der Betrachter ist zusätzlich ein Liquid-Crystal-Shutter vorgesehen. Bei der Verwendung von LC-Shutter, welche beispielsweise an der Bildaufnahmeeinrichtung, z.B. der Brille, bzw. an der Bildanzeigeeinrichtung, z.B. dem Projektor, angeordnet sind, ist durch Erhöhung der Taktfrequenz der sogenannte Flimmereffekt weitgehend vermieden.

Beispielhaft sind zur besseren Erläuterung verschiedene, alternative Ausführungen der Vorrichtung für zwei Betrachter wie folgt beschrieben:
Vorrichtung A umfaßt beispielsweise je Frequenztripel eine Bildanzeigeeinheit und je Betrachter eine Bildaufnahmeeinheit und eine Meßeinrichtung zur Bestimmung der Position des Betrachters, um eine positionsabhängige 3D-Darstellung eines Objekts wie folgt zu ermöglichen:

| | | |
|---|---|---|
| Betrachter 1 | Perspektive 1 | Frequenztripel 1 |
| | Perspektive 2 | Frequenztripel 2 |
| Betrachter 2 | Perspektive 3 | Frequenztripel 3 |
| | Perspektive 4 | Frequenztripel 4 |

ODER
Vorrichtung B umfaßt beispielsweise je Frequenztripel eine Bildanzeigeeinheit und je Betrachter eine Bildaufnahmeeinheit, einen Shutter und eine Meßeinrichtung zur Bestimmung der Position des Betrachters, um eine positionsabhängige Darstellung eines Objekts wie folgt zu ermöglichen:

| | | | |
|---|---|---|---|
| Betrachter 1 | Perspektive 1 | Frequenztripel 1 | Shutter auf |
| | Perspektive 2 | Frequenztripel 2 | Shutter auf |
| Betrachter 2 | Perspektive 3 | Frequenztripel 1 | Shutter zu |
| | Perspektive 4 | Frequenztripel 2 | Shutter zu |

ODER
Vorrichtung C umfaßt beispielsweise je Frequenztripel eine Bildanzeigeeinheit und je Betrachter eine Bildaufnahmeeinheit, einen Shutter und eine Meßeinrichtung zur Bestimmung der Position des Betrachters, um eine positionsabhängige Darstellung eines Objekts wie folgt zu ermöglichen:

| | | | |
|---|---|---|---|
| Betrachter 1 | Perspektive 1 | Frequenztripel 1 | Shutter auf |
| | Perspektive 2 | Frequenztripel 1 | Shutter zu |
| Betrachter 2 | Perspektive 3 | Frequenztripel 2 | Shutter auf |
| | Perspektive 4 | Frequenztripel 2 | Shutter zu |

(mit Perspektive 1 und 2 bzw. 3 und 4 = Augenperspektive des jeweiligen Betrachters 1 oder 2, Frequenztripel 1 bis 4 = jeweils 3 Frequenzbänder für die Grundfarben rot, grün und blau, Shutter = LC-Shutter)

In Abhängigkeit von der Darstellung in einem Raum mit mehreren Wänden (=Mehrseitenprojektion) sowie in Abhängigkeit von der Art und Weise der Ausführung der Vorrichtung sind beispielsweise für jede Wand je Betrachter zwei Bildanzeigeeinrichtungen und je Betrachter eine Bildaufnahmeeinrichtung oder für jede Wand je Betrachter eine zugehörige Bildanzeige- und Bildaufnahmeeinrichtung vorgesehen. Mit anderen Worten: Für jedes Frequenztripel ist jeweils eine zugehörige Bildanzeigeeinrichtung vorgesehen. Bei einer Kombination von Interferenzfilterung und LC-Shuttertechnik kann die Anzahl der Bildanzeigeeinrichtungen reduziert werden. Bei einer allein auf Interferenzfilterung basierenden Vorrichtung ist je Frequenztripel eine Bildanzeigeeinrichtung vorgesehen. Somit kann die Anzahl der LC-Shutter, der Interferenzfilter und/oder der Bildanzeigemittel je nach Ausführungsform der Vorrichtung sowie Ausführung des Raums in geschlossener oder offener Umgebung variieren. Die Anzahl der Bildaufnahmeeinrichtung, z.B. der Brille, entspricht bevorzugt der Anzahl der vorgegebenen Betrachtern.

Für einen Online-Betrieb der Vorrichtung, z.B. für eine die Bewegung des Betrachters und somit die Änderung der perspektivischen Sicht berücksichtigenden Darstellung des Objekts, ist als Meßeinrichtung ein Sensor zur Positionsbestimmung vorgesehen, der mittels einer drahtlosen Übertragung Daten zur Position an eine Rechnereinheit, z.B. an einen Grafikrechner, überträgt. Anhand der Daten wird mittels des Rechners die jeweilige perspektivische Sicht des Betrachters auf das Objekt ermittelt und anhand der Bildanzeigeeinrichtung das entsprechende perspektivische Bild erzeugt.

Je nach Art und Ausführung kann für alle Bildanzeigeeinrichtungen ein gemeinsamer zentraler Rechner vorgesehen sein. Alternativ kann jede Bildanzeigeeinrichtung einen zugehörigen Rechner aufweisen. Je nach Art und Ausführung werden dann mittels des Rechners anhand der Bildanzeigeeinrichtungen die beiden Halbbilder für jeden Betrachter oder ein Bild für jeden Betrachter erzeugt, wobei bei letzterem die Trennung der beiden Halbbilder mittels der LC-Shutter erfolgt.

Die mit der Erfindung erzielten Vorteile bestehen insbesondere darin, daß durch eine positionsabhängige 3D-Darstellung des Objekts mehrere Betrachter gleichzeitig und gemeinsam dieses Objekt aus verschiedenen Perspektiven betrachten können. Insbesondere ist es mit diesem Verfahren ermöglicht, daß bei gemeinsamen Arbeiten von mehreren Personen eine weitgehend realitätsnahe die jeweilige Position des Betrachters repräsentierende Sicht auf das Objekt im zugehörigen Bild dargestellt wird, wodurch eine gegenüber bisherigen Systemen verbesserte Visualisierung, insbesondere möglichst verzerrungsarme Visualisierung, von virtuell erzeugten Objekten ermöglicht ist. Durch das hier beschriebene Verfahren und die dabei eingesetzte Vorrichtung ist darüber hinaus eine besonders hohe Bildtrennung für die Augenperspektiven eines einzelnen Betrachters und/oder für die positionsabhängigen Perspektiven mehrerer Betrachter ermöglicht. Sogenannte durch seitliche Kopfbewegung verursachte Geisterbilder sind sicher vermieden. Die Projektion des Objekts in Form eines 3D-Bildes ist dabei unabhängig von der Projektionsfläche und kann auf eine beliebige Wand projiziert werden. Insbesondere ist bei seitlicher Betrachterposition zur Projektionsfläche eine besonders hohe Bildtrennung ermöglicht.

Ausführungsbeispiele der Erfindung werden anhand einer Zeichnung näher erläutert. Darin zeigen:
- FIG 1: schematisch eine Vorrichtung zur mehrdimensionalen Darstellung eines Objekts für mehrere Betrachter,
- FIG 2: schematisch eine Bildanzeigevorrichtung gemäß Figur 1,
- FIG 3: schematisch eine Bildaufnahmeeinrichtung gemäß Figur 1, und
- FIG 4 bis 6: mehrere Diagramme zur Darstellung der Auskopplung verschiedener Spektralbereiche für verschieden ausgeführte Vorrichtungen gemäß Figur 1.

Einander entsprechende Teile sind in allen Figuren mit den gleichen Bezugszeichen versehen.

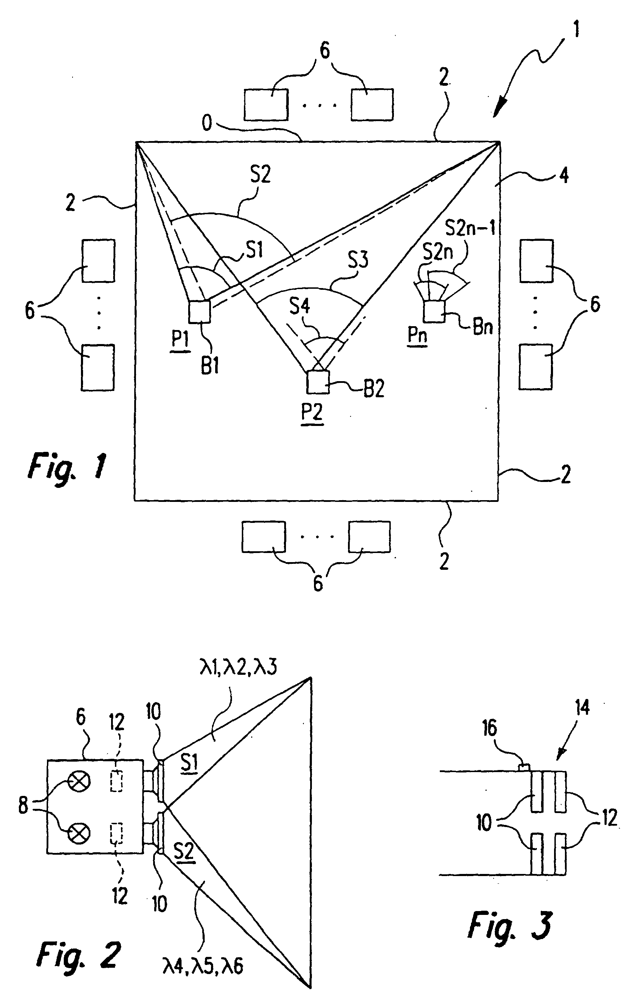

Figur 1 zeigt eine Vorrichtung 1 zur mehrdimensionalen Darstellung eines Bildes für ein Objekt 0 auf einer Fläche 2 für eine Mehrzahl von Betrachtern B1 bis Bn. Die Fläche 2 ist beispielsweise eine Projektionsfläche in einem Raum 4. Alternativ kann die Fläche 2 auch in einer offenen Umgebung angeordnet sein.

Die Betrachter B1 bis Bn weisen hinsichtlich ihrer Betrachtung des Objekts O auf der Fläche 2 unterschiedliche Positionen P1 bis Pn und somit unterschiedliche perspektivische Sichten S₂ₙ₋₁ bis S₂ₙ auf das Objekt O auf. Bedingt durch den Abstand der Augen eines jeden Betrachters B1 bis Bn umfaßt jeder Betrachter B1 bis Bn zwei Perspektiven S₁ und S₂ bzw. 2ₙ₋₁ und 2ₙ.

Zur Projektion des Objekts O in Form eines Bildes auf eine der Flächen 2 des Raums 4 sind eine Mehrzahl von Bildanzeigeeinrichtungen 6 vorgesehen. Je nach Art und Ausführung der Bildanzeigeeinrichtungen 6 können diese voroder rückseitig zur Fläche 2 angeordnet sein. Als Bildanzeigeeinrichtung 6 ist beispielsweise ein LCD-Display, ein Plasma-Display, ein Laser-Projektor oder ein Röhrenprojektor vorgesehen.

In der Figur 2 ist schematisch eine derartige Bildanzeigeeinrichtung 6 dargestellt. Die Bildanzeigeeinrichtung 6 umfaßt zur Erzeugung von Bildern für das Objekt O für zwei verschiedene Perspektiven S1 und S2 oder S3 und S4 zwei Strahler 8 auf, denen jeweils ein Interferenzfilter 10 zur Trennung der beiden Bilder für die verschiedenen Perspektiven S1 und S2 zugeordnet ist. Mittels des jeweiligen Interferenzfilters 10 wird für das zu erzeugende Bild des Objekts O aus dem Strahlenspektrum der Bildanzeigeeinrichtung 6 eine Mehrzahl von vorgebbaren Spektralbereichen λ1 bis λ3 für die Perspektive S1 bzw. von vorgebbaren Spektralbereichen λ4 bis λ6 für die Perspektive S2 herausgefiltert. Dabei werden für die jeweilige Perspektive S1 und S2 unterschiedliche Spektralbereiche λ1 bis λ3 bzw. λ4 bis λ6 ausgekoppelt, die im Strahlenspektrum eng benachbart sind.

Als Spektralbereiche λ1 bis λ3 und λ4 bis λ6 für die jeweilige Perspektive S1 bzw. S2 werden schmalbandige Frequenzbänder von ca. 5 bis 20 nm aus dem Strahlen- oder Emissionsspektrum der Bildanzeigeeinrichtung 6 ausgekoppelt. Bevorzugt umfassen die Frequenzbänder jene Spektralbereiche λ1 bis λ6, die in den Spektralbereichen für die Grundfarben rot, grün und blau liegen, die vom menschlichen Auge wahrgenommen werden. Die beiden Perspektiven S1 und S2 können zum einen die verschiedenen Augenperspektiven eines einzelnen Betrachters B1 sein. Alternativ können es aber auch zwei verschiedene Perspektiven S1 und S3 von verschiedenen Betrachtern B1 bzw. B2 sein.

Zur Trennung der für einen einzelnen Betrachter B1 bis Bn erforderlichen zwei Halbbilder bzw. zur Trennung von für mehrere Betrachter B1 bis Bn erforderlichen Bilder kann die Bildanzeigeeinrichtung 6 additiv zum Interferenzfilter 10 einen LC-Shutter 12 aufweisen. Dabei wird mittels eines Synchronisiersignals das jeweilige LC-Shutter 12 zur Trennung der Bilder für die beiden Perspektiven S1 und S2 abwechselnd mit einer Taktsequenz geöffnet und geschlossen.

Alternativ zur Ausführung der Bildanzeigeeinrichtung 6 mit den Interferenzfiltern 10 und/oder den LC-Shuttern 12 ist in Figur 3 eine Bildaufnahmeeinrichtung 14 dargestellt. Als Bildaufnahmeeinrichtung 14 ist beispielhaft eine dem jeweiligen Betrachter B1 bis Bn zugehörige Brille vorgesehen. Die Bildaufnahmeeinrichtung 14 umfaßt zur Trennung der Halbbilder des einzelnen Betrachters B1 bis B2 das Interferenzfilter 10. Additiv kann zur Trennung der Halbbilder der LC-Shutter 12 vorgesehen sein. Je nach Art und Vorgabe kann die Vorrichtung 1 verschiedenartig ausgeführt sein. D.h. die Bildaufnahmeeinrichtung 14 und/oder die Bildanzeigeeinrichtung 10 können nur Interferenzfilter 10 oder eine Kombination von Interferenzfilter 10 und LC-Shutter 12 oder eine Kombination von Interferenzfilter 10, LC-Shutter 12 und Polarisationsfilter (nicht dargestellt) umfassen. Für den Fall, daß beispielsweise als Bildanzeigeeinrichtung 6 ein Laser-Projektor vorgesehen ist, sind lediglich Interferenzfilter 10 der Bildaufnahmeeinrichtung 14 eines jeden Betrachters B1 bis Bn zugeordnet, d.h. die Interferenzfilter 10 für die Bildanzeigeeinrichtung 6 können entfallen.

Zur Positionsbestimmung des jeweiligen Betrachters B1 bis Bn weist die zugehörige Bildaufnahmeeinrichtung 14 eine Meßeinrichtung 16 auf, welche die Daten zur Position des Betrachters B1 bis Bn einem nicht dargestellten Rechner z.B. drahtlos übermittelt.

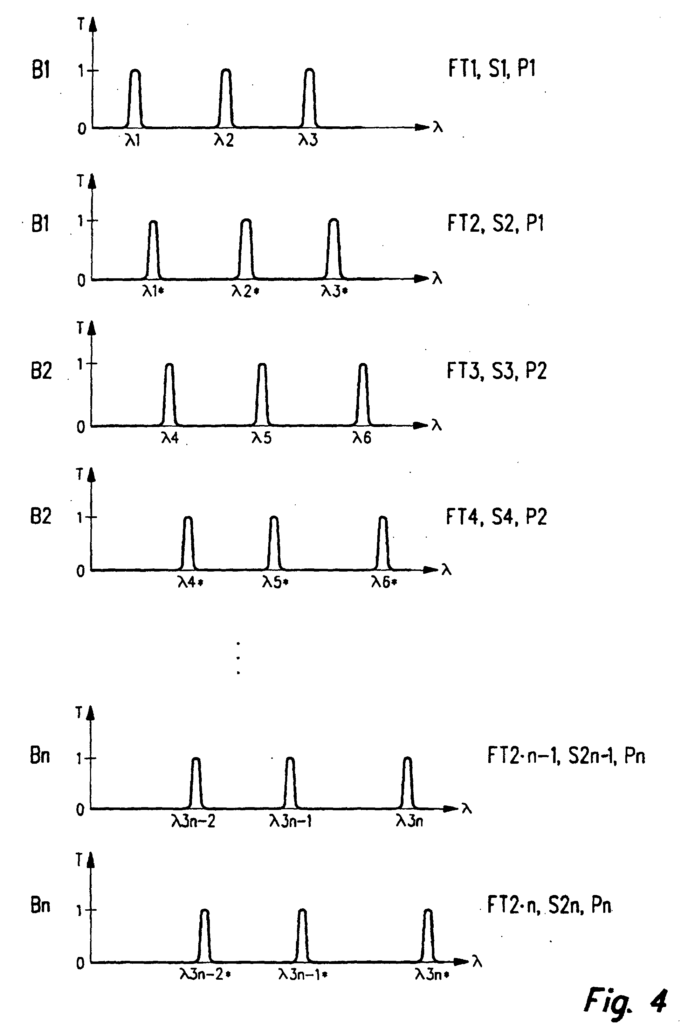

In den Figuren 4 bis 6 sind verschiedene Möglichkeiten für die jeweilige Auskopplung und Trennung der Bilder mehrerer Betrachter B1 bis Bn sowie der Halbbilder des jeweils einzelnen Betrachters B1 bis Bn dargestellt.

Figur 4 repräsentiert den Fall, in welchem für mehrere Betrachter B1 bis Bn mit verschiedenen Positionen P1 bis Pn und daraus resultierend mit verschiedenen Perspektiven S1 bis S₂ₙ die Vorrichtung 1 bevorzugt nur Interferenzfilter 10 zur Trennung der einzelnen Bilder umfaßt, indem jeweils unterschiedliche Spektralbereiche λ1 bis λ3n* herausgefiltert werden. Dabei werden für jeden einzelnen Betrachter B1, B2 bis Bn jeweils zwei Perspektiven S1 und S2, S3 und S4 bzw. S₂ₙ₋₁ und S₂ₙ bedingt durch dessen Augenabstand mittels der Auskopplung eines zugehörigen Frequenztripels FT1 und FT2, FT3 und FT4 bzw. FT₂ₙ₋₁ und FT₂ₙ beschrieben und anhand der Bildanzeigeeinrichtung 6 in Form eines zugehörigen Bildes für das Objekt O auf der Fläche 2 dargestellt.

Als Frequenztripel FT1 bis FT2 werden jeweils drei die Spektrallinien für die Grundfarben rot, grün und blau umfassende Frequenzbänder aus dem Strahlenspektrum der Bildanzeigeeinrichtung 6 ausgekoppelt. Für den Betrachter 1 werden beispielsweise für das linke Auge und damit für die Perspektive S1 als Frequenztripel FT1 die Frequenzbänder 445 bis 455 nm (=blaue Farbe), 515 bis 525 nm (= grüne Farbe) und 605 bis 615 nm (=rote Farbe) ausgekoppelt. Für das rechte Auge werden entsprechend benachbarte oder verschobene Spektralbereiche λ1* bis λ3* und somit das Frequenztripel FT2 mit den Frequenzbändern 460 bis 470 nm (=blaue Farbe), 530 bis 540 nm (= grüne Farbe) und 620 bis 630 nm (=rote Farbe) ausgekoppelt. Für den Betrachter 2 werden in Analogie dazu ebenfalls geringfügig um einen Frequenzbereich verschobene Frequenztripel FT3 und FT4 verwendet. Durch eine derartige nur geringe Verschiebung der einzelnen Frequenzbänder der Frequenztripel FT1 bis FT4 aufgrund der Schmalbandigkeit ist gewährleistet, daß für alle Betrachter B1 bis Bn die jeweilige Grundfarbe herausgefiltert wird. Durch die mittels der Interferenzfilter 10 gefilterten Spektralbereiche λ1 bis λ3n* nimmt der jeweilige Betrachter B1 bis Bn für jedes Auge das zugehörige Halbbild stereoskopisch und mit seinen beiden Augen das positionsbezogene Bild für das Objekt O auf.

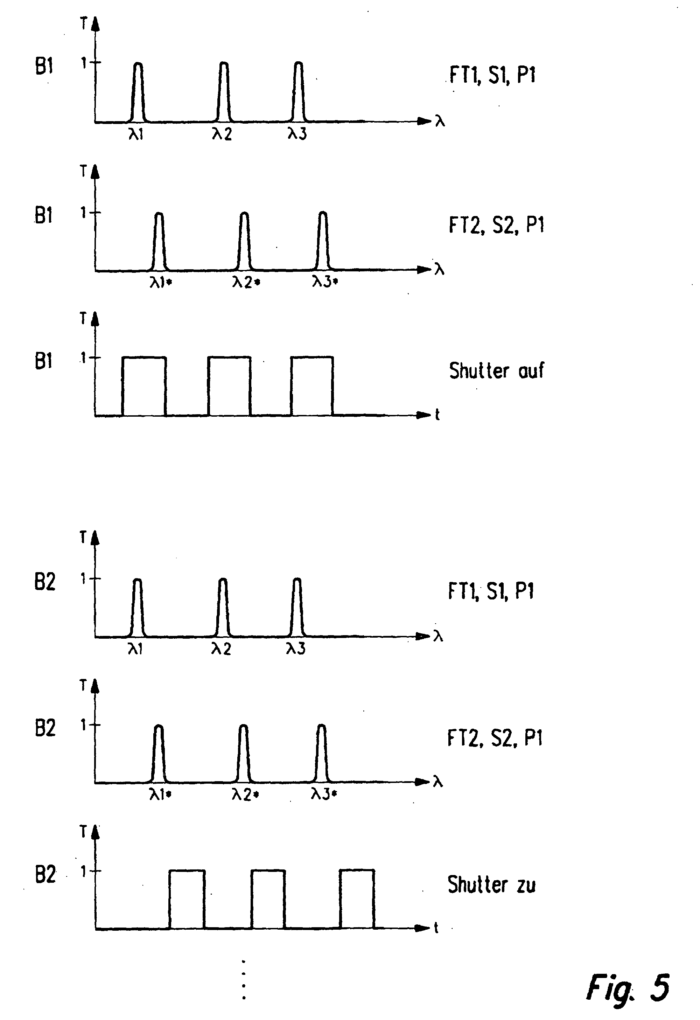

Figur 5 repräsentiert einen alternativen Fall, in welchem für mehrere Betrachter B1 bis Bn (beispielhaft für zwei Betrachter dargestellt) mit verschiedenen Positionen P1 bis Pn und daraus resultierend mit verschiedenen Perspektiven S1 bis S₂ₙ die Vorrichtung 1 bevorzugt Interferenzfilter 10 und LC-Shutter 12 zur Trennung der einzelnen Bilder und/ oder Halbbilder umfaßt. Dabei werden für beide Betrachter B1 und B2 für die jeweils zugehörigen zwei Augenperspektiven S1 und S2 bzw. S3 und S4 unterschiedliche Frequenztripel FT1 und FT2 als Spektralbereiche λ1 bis λ3 bzw. λ1* bis λ3* herausgefiltert. Zur Trennung der Halbbilder der jeweiligen Augenperspektive S1 und S2 bzw. S3 und S4 werden je Betrachter B1 und B2 die unterschiedlichen Frequenztripel FT1 und FT2 mittels der Interferenzfilter 10 ausgekoppelt. Zur Trennung der Bilder der beiden Betrachter B1 und B2 sind LC-Shutter 12 vorgesehen, die für den jeweiligen Betrachter B1 und B2 unterschiedlich synchronisiert werden. D.h. wenn der LC-Shutter 12 für den Betrachter B1 offen ist, dann ist der LC-Shutter 12 von Betrachter B2 geschlossen.

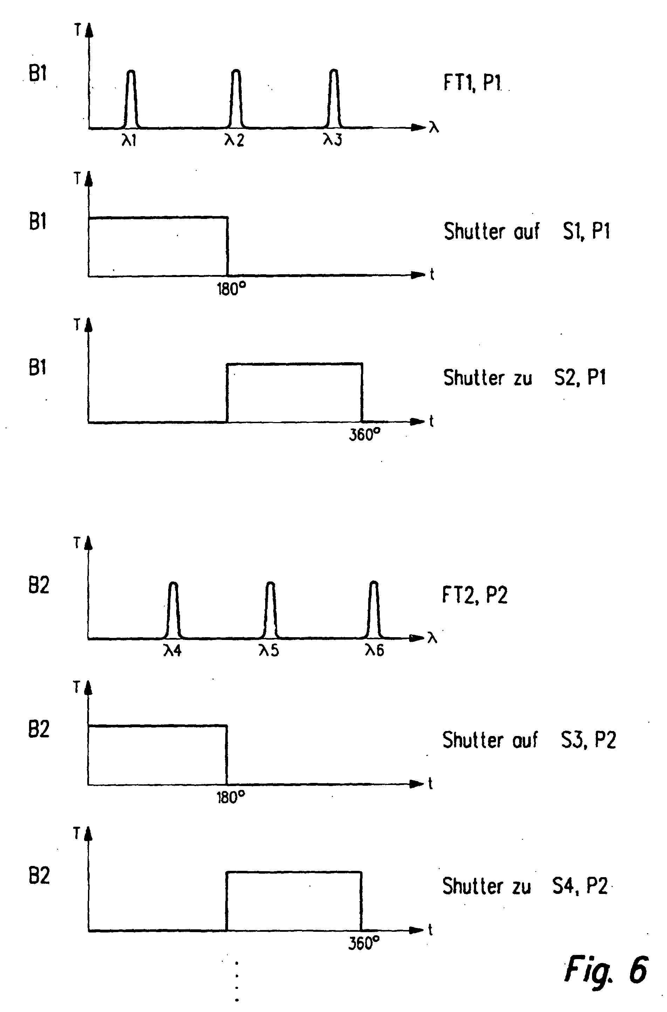

Figur 6 repräsentiert einen weiteren, alternativen Fall, in welchem für mehrere Betrachter B1 bis Bn (beispielhaft für zwei Betrachter B1 und B2 dargestellt) mit verschiedenen Positionen P1 bis Pn und daraus resultierend mit verschiedenen Perspektiven S1 bis S₂ₙ die Vorrichtung 1 bevorzugt Interferenzfilter 10 und LC-Shutter 12 zur Trennung der einzelnen Bilder und/oder Halbbilder umfaßt. Dabei werden für beide Betrachter B1 und B2 für die jeweils zugehörigen zwei Augenperspektiven S1 und S2 bzw. S3 und S4 gleiche Frequenztripel FT1 bzw. FT2 durch Auskopplung der Spektralbereiche λ1 bis λ3 bzw. λ1* bis λ3* mittels Interferenzfilter 10 verwendet. Zur Trennung der jeweiligen Augenperspektive S1 und S2 bzw. S3 und S4 sind je Betrachter B1 und B2 LC-Shutter 12 vorgesehen, die für die jeweilige Augenpersektive S1 und S2 bzw. S3 und S4 unterschiedlich synchronisiert werden. D.h. wenn der LC-Shutter 12 für den Betrachter B1 für die Perspektive S1 offen ist, dann ist der LC-Shutter 12 für die Perspektive S2 des Betrachters B1 geschlossen. Zur Trennung der Bilder der beiden Betrachter B1 und B2 werden die verschiedenen, eng benachbarten Spektralbereiche λ1 bis λ3 bzw. λ4 bis λ6 mittels Interferenzfilter 10 ausgekoppelt.

Je nach Art und Anzahl der Betrachter B1 bis Bn kann die Vorrichtung 1 additiv Polarisationsfilter zur Trennung der verschiedenen Bilder umfassen.

Im Betrieb der Vorrichtung 1 wird die mittels der jeweiligen Meßeinrichtung 16 ermittelte Position P1 bis Pn der Betrachter B1 bis Bn zur Bestimmung der verschiedenen Perspektiven S1 bis S₂ₙ verwendet. Anhand der ermittelten Perspektiven S1 bis S₂ₙ werden dann mittels der Bildanzeigeeinrichtung 6 ein die jeweilige Perspektive S1 bis S₂ₙ repräsentierendes Bild des Objekts O auf der Fläche 2 erzeugt. Zur Trennung der verschiedenen Bilder sind eine entsprechende Anzahl von Interferenzfiltern 10 und Bildaufnahmeeinrichtungen 14 sowie Bildanzeigeeinrichtungen 6 vorgesehen.

Additiv können zur Erhöhung der Anzahl der Betrachter B1 bis Bn und somit zur Erhöhung der Anzahl der verschiedenen perspektivischen Bilder LC-Shutter 12 vorgesehen sein. Zur Synchronisation der LC-Shutter 12 ist bevorzugt eine nicht dargestellte zentrale oder dezentrale Rechnereinheit vorgesehen. Eine weitere Erhöhung der Anzahl der Betrachter B1 bis Bn ist durch die Verwendung von Polarisationsfiltern zur Trennung der Bilder vorgesehen.

Durch die Verwendung von Interferenzfiltern 10 zur Trennung der Bilder ist eine besonders hohe Trennschärfe erzielt. Insbesondere durch die besonders schmalbandige Durchlässigkeit bei Wellenlänge der Grundfarben wird eine selektive Wahrnehmung bei den Betrachtern B1 bis Bn erreicht. Das Tageslicht mit seinem kontinuierlichen Spektrum ist weitgehend herausgefiltert und somit unterdrückt, da die Interferenzfilter 10 nur für schmale Spektralbereiche λ1 bis λ2ₙ der drei Grundfarben durchlässig sind.

## Patentansprüche

1. Verfahren zur mehrdimensionalen Darstellung eines Objekts (O) für eine Mehrzahl von Betrachtern (B1 bis Bn), bei dem für den jeweiligen Betrachter (B1 bis Bn) eine zugehörige Position (P1 bis Pn) im Raum bestimmt und anhand der Position (P1 bis Pn) ein die perspektivische Sicht (S1 bis S₂ₙ) des zugehörigen Betrachters (B1 bis Bn) repräsentierendes Bild für das Objekt (O) erzeugt wird,
**dadurch gekennzeichnet,**
**dass** bei dem zur Erzeugung des den jeweiligen Betrachter (B1 bis Bn) zugehörigen Bildes aus einem Strahlenspektrum einer Bildanzeigeeinrichtung (6) eine Mehrzahl von für die verschiedenen Betrachter unterschiedlichen Spektralbereichen (λ1 bis λ3*n) herausgefiltert wird.

2. Verfahren nach Anspruch 1, bei dem als Spektralbereiche (λ1 bis λ3*n) schmalbandige Frequenzbänder ausgekoppelt werden.

3. Verfahren nach Anspruch 2, bei dem schmale Frequenzbänder von ca. 5 bis 20 nm ausgekoppelt werden.

4. Verfahren nach einem der Ansprüche 1 bis 3, bei dem für jeden Betrachter (B1 bis Bn) zwei Bilder erzeugt werden.

5. Verfahren nach Anspruch 4, bei dem für die beiden Bilder des jeweiligen Betrachters (B1 bis Bn) benachbarte, unterschiedliche Spektralbereiche (λ1 bis λ3, λ1* bis λ3*) ausgekoppelt werden.

6. Verfahren nach Anspruch 4 oder 5, bei dem die beiden Bilder des jeweiligen Betrachters (B1 bis Bn) mit einer zugehörigen Taktsequenz angezeigt werden.

7. Verfahren nach Anspruch 6, bei dem für mehrere Betrachter (B1 bis Bn) bei gleicher Taktsequenz unterschiedliche Spektralbereiche (λ1 bis λ3, λ4 bis λ6) ausgekoppelt werden.

8. Verfahren nach Anspruch 6, bei dem für mehrere Betrachter (B1 bis Bn) bei unterschiedlicher Taktsequenz gleiche Spektralbereiche (λ1 bis λ3, λ1* bis λ3*) ausgekoppelt werden.

9. Vorrichtung (1) zur mehrdimensionalen Darstellung eines Objekts (O) für eine Mehrzahl von Betrachtern (B1 bis Bn) mit einer dem jeweiligen Betrachter (B1 bis Bn) zugehörigen Bildselektionseinrichtung (14) sowie einer dem jeweiligen Betrachter (B1 bis Bn) zugehörigen Meßeinrichtung (16) zur Bestimmung seiner Position (P1 bis Pn) im Raum (4) und wenigstens einer Bildanzeigeeinrichtung zur Darstellung eines die perspektivische Sicht (S1 bis S₂ₙ) des zugehörigen Betrachters (B1 bis Bn) repräsentierenden Bilds für das Objekt (O) anhand der Position (P1 bis Pn) des Betrachters(B1 bis Bn),
**dadurch gekennzeichnet,**
**dass** eine Mehrzahl von Bildanzeigeeinrichtungen (6) vorgesehen sind,
wobei den Bildanzeigeeinrichtungen (6) jeweils Filter zur Erzeugung des den jeweiligen Betrachter (B1 bis Bn) zugehörigen Bildes aus einem Strahlenspektrum der zugehörigen Bildanzeigeeinrichtung (6) zugeordnet sind und wobei die Filter so gewählt sind, dass eine Mehrzahl von für die verschiedenen Betrachter unterschiedlichen Spektralbereichen (λ1 bis λ3*n) herausgefiltert werden.

10. Vorrichtung nach Anspruch 9, bei dem als Bildselektionseinrichtung (14) des jeweiligen Betrachters (B1 bis Bn) eine Brille vorgesehen ist.

11. Vorrichtung nach Anspruch 9 oder 10, bei dem zur Erzeugung des Bildes für den jeweiligen Betrachter (B1 bis Bn) mindestens ein vorgebbares Interferenzfilter (10) vorgesehen ist.

12. Vorrichtung nach einem der Ansprüche 9 bis 11, bei dem ein Liquid-Crystal-Shutter (12) für den jeweiligen Betrachter (B1 bis Bn) vorgesehen ist.

## Claims

1. Method for the multidimensional display of an object (O) for a plurality of viewers (B1 to Bn), in the case of which an associated position (P1 to Pn) in space is determined for the respective viewer (B1 to Bn), and the position (P1 to Pn) is used to generate, for the object (O), an image representing the perspective view (S1 to S₂ₙ) of the associated viewer (B1 to Bn), **characterized in that** a plurality of spectral regions (λ1 to λ3*n) which differ for the various viewers are filtered out from a radiation spectrum of an image display device (6) in order to generate the image associated with the respective viewer (B1 to Bn).

2. Method according to Claim 1, in which narrowband frequency bands are coupled out as spectral regions (λ1 to λ3*n).

3. Method according to Claim 2, in which narrow frequency bands of approximately 5 to 20nm are coupled out.

4. Method according to one of Claims 1 to 3, in which two images are generated for each viewer (B1 to Bn).

5. Method according to Claim 4, in which neighbouring, different spectral regions (λ1 to λ3, λ1* to λ3*) are coupled out for the two images of the respective viewer (B1 to Bn).

6. Method according to Claim 4 or 5, in which the two images of the respective viewer (B1 to Bn) are displayed with the aid of an associated timing sequence.

7. Method according to Claim 6, in which differing spectral regions (λ1 to λ3, λ4 to λ6) are coupled out for a plurality of viewers (B1 to Bn) in conjunction with the same timing sequence.

8. Method according to Claim 6, in which the same spectral regions (λ1 to λ3, λ1* to λ3*) are coupled out for a plurality of viewers (B1 to Bn) in conjunction with a different timing sequence.

9. Apparatus (1) for multidimensional display of an object (0) for a plurality of viewers (B1 to Bn), having an image selection device (14) associated with the respective viewer (B1 to Bn), and a measuring device (16), associated with the respective viewer (B1 to Bn), for determining its position (P1 to Pn) in space (4), and at least one image display device for displaying an image, representing the perspective view (S1 to S₂ₙ) of the associated viewer (B1 to Bn), for the object (O) with the aid of the position (P1 to Pn) of the viewer (B1 to Bn), **characterized in that** a plurality of image display devices (6) are provided, the image display devices (6) respectively being assigned filters for generating the image, associated with the respective viewers (B1 to Bn), from the radiation spectrum of the associated image display device (6), and the filters being selected such that a plurality of spectral regions (λ1 to λ3*n) which differ for the various viewers are filtered out.

10. Apparatus according to Claim 9, in which spectacles are provided as image selection device (14) of the respective viewer (B1 to Bn).

11. Apparatus according to Claim 9 or 10, in which at least one prescribable interference filter (10) is provided for generating the image for the respective viewer (B1 to Bn).

12. Apparatus according to one of Claims 9 to 11, in which a liquid crystal shutter (12) is provided for the respective viewer (B1 to Bn).

## Revendications

1. Procédé d'affichage à plusieurs dimensions d'un objet (O) destiné à une pluralité d'observateurs (B1 à Bn), par lequel une position (P1 à Pn) particulière dans l'espace est déterminée pour chacun des observateurs (B1 à Bn) et une image de l'objet (O) représentant la vue en perspective (S1 à S₂ₙ) de l'observateur (B1 à Bn) correspondant est générée sur base de la position (P1 à Pn), **caractérisé en ce qu'**une pluralité de plages spectrales (λ1 à λ3*n) distinctes pour les différents observateurs est filtrée d'un spectre de rayonnement d'un dispositif (6) d'affichage d'images, afin de générer l'image correspondante pour chacun des observateurs (B1 à Bn).

2. Procédé selon la revendication 1, par lequel des bandes de fréquences étroites sont dissociées en tant que plages spectrales (λ1 à λ3*n).

3. Procédé selon la revendication 2, par lequel des bandes de fréquences étroites d'environ 5 à 20 nm sont dissociées.

4. Procédé selon l'une quelconque des revendications 1 à 3, par lequel deux images sont générées pour chaque observateur (B1 à Bn).

5. Procédé selon la revendication 4, par lequel des plages spectrales (λ1 à λ3, λ1* à λ3*) distinctes voisines sont dissociées pour les deux images de chacun des observateurs (B1 à Bn).

6. Procédé selon la revendication 4 ou 5, par lequel les deux images de chacun des observateurs (B1 à Bn) sont affichées à une séquence de synchronisation correspondante.

7. Procédé selon la revendication 6, par lequel des plages spectrales (λ1 à λ3, λ4 à λ6) distinctes sont dissociées à une même séquence de synchronisation pour plusieurs observateurs (B1 à Bn).

8. Procédé selon la revendication 6, par lequel des plages spectrales (λ1 à λ3, λ1* à λ3*) identiques sont dissociées à une fréquence de synchronisation différente pour plusieurs observateurs (B1 à Bn).

9. Dispositif (1) d'affichage à plusieurs dimensions d'un objet (O) destiné à une pluralité d'observateurs (B1 à Bn), comportant un dispositif (14) de sélection d'images associé à chacun des observateurs (B1 à Bn) ainsi qu'un dispositif de mesure (16) associé à chacun des observateurs (B1 à Bn) destiné à déterminer sa position (P1 à Pn) dans l'espace (4) et au moins un dispositif d'affichage d'images destiné à afficher une image de l'objet (O) représentant la vue en perspective (S1 à S₂ₙ) de l'observateur (B1 à Bn) correspondant, sur base de la position (P1 à Pn) de l'observateur (B1 à Bn), **caractérisé en ce qu'**il est prévu une pluralité de dispositifs (6) d'affichage d'images, des filtres destinés à générer l'image correspondante pour chacun des observateurs (B1 à Bn) à partir d'un spectre de rayonnement du dispositif (6) d'affichage d'images correspondant, étant chaque fois associés aux dispositifs (6) d'affichage d'images et les filtres étant choisis de telle sorte qu'une pluralité de plages spectrales (λ1 à λ3*n) distinctes pour les différents observateurs soit filtrée.

10. Dispositif selon la revendication 9, dans lequel il est prévu des lunettes en tant que dispositif (14) de sélection d'images de chacun des observateurs (B1 à Bn) .

11. Dispositif selon la revendication 9 ou 10, dans lequel il est prévu au moins un filtre d'interférence (10) pouvant être prédéfini afin de générer l'image pour chacun des observateurs (B1 à Bn).

12. Dispositif selon l'une quelconque des revendications 9 à 11, dans lequel il est prévu un obturateur (12) à cristaux liquides pour chacun des observateurs (B1 à Bn).
